# EUROPEAN PATENT APPLICATION

(11) **EP 4 687 067 A1**
(43) Date of publication of application: **04.02.2026**
(21) Application number: 24306290.8
(22) Date of filing: 31.07.2024
(51) Int. Cl.: G06K 19/077

(54) **DATA CARRIER AND METHOD PRODUCING SUCH A DATA CARRIER**

(71) Applicant: THALES DIS FRANCE SAS, 92190 Meudon (FR)
(72) Inventor: TIBILETTI, Lucie, 13600 La Ciotat (FR); BRAITHWAITE, Gregory, 13600 La Ciotat (FR); SEBAN, Frédérick, 13390 Auriol (FR); DELLYS, Alexis, 13390 Auriol (FR); CHOO, Yeow Chun Ricky, 669562 Singapore (SG)
(74) Representative: Castelo, Jérôme

(57) **Abstract**

A method comprises two steps, first preparing a molded base (3) containing at least two conductive plots (7) in a molded base body (30). A dual interface module (2) is embedded with first ACF (10) in this base creating a first assembly. The first assembly is punched according to a defined dimension. The second step is related to the preparation of a cardbody structure (4) with at least a metal plate (5) and a cavity. The cavity can be milled in full metal after lamination or the hole exists in the metal plate before it is laminated with a plastics layer (6). The cardbody cavity is milled to reveal antenna connection pads (8) and to give room to fit the first assembly. The first assembly is then embedded in the cardbody (4) with second ACF (10).

## Description

### TECHNICAL FIELD

The present invention relates to a data carrier comprising a metal layer with a recess, an electronic module comprising a chip and being embedded in said recess, and a plastics layer with embedded antenna wires, wherein the electronic module has a flange portion and a shaft portion with reduced diameter, wherein chip contacting surfaces are provided on the underside of the flange portion. The invention also relates to a method of producing such a data carrier.

### PRIOR ART

Smart cards comprise a module with a chip requiring the milling of a cavity to embed the module. Some smart cards have a full front metal surface. The milling and the connection of such cavity in a card having a full front metal surface is difficult. It is difficult to mill in full metal and to mill in a mix of materials comprising inter alia metal. Additionally, when the material or material mix comprises a metal, it is difficult to connect on a deep inlay.

Applicant has disclosed a data carrier in EP 4 202 763 A1 comprising at least a first metallic layer; at least one electronic module; at least one antenna; and at least a second metallic layer, wherein the second metallic layer is arranged after the first metallic layer with respect to an extension direction, and wherein the antenna is in connection with the electronic module, wherein the first metallic layer is a continuous metallic layer delimiting a recess, and wherein the electronic module is at least partially arranged within said recess. EP 4 202 763 also discloses a method for producing said data carrier.

A similar smartcard with a metal card body (MCB) is disclosed in US 2019/114526 A1. Said metal smartcard has a card body comprising a stackup of at least two metal layers, each of the metal layers having a discontinuity in the form of a slit or nonconductive stripe extending through the layer from an outer edge of the layer to an interior position thereof; wherein the slit of a given metal layer is positioned or oriented differently than the slit(s) of the other metal layer(s) so that the slits of the at least two metal layers are not aligned with one another.

US 2021/350198 A1 describes a transaction card (smartcard) having a front "continuous" (with no slit) metal layer with an opening for a dual-interface transponder chip module having a module antenna on its bond side. A magnetic shielding layer comprising ferrite material disposed below the front face continuous metal layer. An amplifying element, booster antenna circuit disposed under the magnetic shielding layer. A rear discontinuous metal layer with a slit and a metal ledge surrounding the module opening to function as a coupling frame. A rear plastic layer formed of non-RF impeding material may support a magnetic stripe and security elements (signature panel and hologram). A portion of the front face continuous metal layer may protrude downward into the magnetic shielding layer and booster antenna circuit layer. The rear discontinuous metal layer may have an additional slit to regulate the activation distance.

EP 4 167 131 A1 from the applicant discloses the use of an anisotropic conductive film (ACF) to attach a module in a metal plate smart card encompassed by PVC layers.

### SUMMARY OF THE INVENTION

Based on this prior art it is an object of the invention to provide a method to build such a smart card with a full metal surface in a more efficient way as well as providing such a data carrier. The object thus comprises:
- a method of producing a preembedded electronic module;
- a method of producing a data carrier comprising such a preembedded electronic module;
- the preembedded electronic module; and
- a data carrier comprising the preembedded electronic module.

The method producing a preembedded electronic module comprises the steps of:
- providing an electronic module with a flange portion and a shaft portion with reduced diameter, wherein chip contacting surfaces are provided on the underside of the flange portion,
   - providing a molded base body having: a first recess with a circumference adapted to accommodate the flange portion of electronic module, embedded conducting plots positioned from the upper surface of the first recess extending towards the underside of the molded base body, and a central through hole with an inner circumference surface adapted to accommodate the shaft portion of electronic module,

   - inserting the electronic module into the first recess and the through hole, wherein conductive contact means are provided either on the chip contacting surfaces of the flange portion or on the plots bringing each of the chip contacting surfaces into conductive contact with one of the plots creating an intermediate module,
   - punching the preembedded electronic module out of the intermediate module with a circumference cutting through the metal layer, the conductive contact means and the molded base body outside the plots.

The technical object of building a data carrier is solved with a two step process, first
- producing a preembedded electronic module as mentioned above; and then
- providing a cardbody with the metal layer and the plastics layer comprising the embedded antenna wires,
- wherein either the cardbody has a pre-prepared recess throughgoing the metal layer or the method comprises the step of creating a recess by milling said recess in the metal layer,
   inserting the preembedded electronic module into the recess.

The alternative pre-preparation of a recess or milling said recess as mentioned above can comprise the feature that the pre-prepared or milled recess ends in a distance above the antenna wires for allowing an inductive contact between the plots of the preembedded electronic module and associated antenna wires in the plastics layer.

The alternative pre-preparation of a recess or the milling said recess as mentioned above can comprise further steps as:
milling or continuing the milling of the recess in the metal layer further into the plastics layer with the same circumference as the recess in the metal layer until a depth revealing the antenna wires in the plastics layer, and optionally:
milling a reduced recess in the recess creating a lower surface in the plastics layer.

Within these embodiments, conductive contact means are provided either on the underside of the plots of the pre-embedded electronic module or on the antenna wires in the plastics layer bringing each of the plots into conductive contact with one of the antenna wires. When the pre-prepared or milled recess ends in a distance above the antenna wires, then the embodiment is related to an inductive mode (i.e. a mode in which there is no physical contact between the module and the antenna), whereas in the case of a milled recess revealing the antenna wires and connecting them with the plots with a direct electrical contact.

In other words, the first step of the method according to the invention is to prepare a molded base containing at least two conductive plots. A dual interface module is embedded with a conductive contact means, e.g. ACF, in this base creating a first assembly. The first assembly is punched according to a defined dimension. The second step is the preparation of a cardbody structure with at least a metal plate and a cavity. The cavity can be milled in full metal after lamination or the hole exists in the metal plate before they are laminated with plastics layers. Special lamination plates with outgrowth matching the cardbody cavity can be used to prevent deformation during lamination. The cardbody cavity is milled to reveal antenna connection pads and to give room to fit the first assembly. The first assembly is then embedded in the cardbody with further contact conductive means, as e.g. ACF, contact sec, silver glue or manual elements as springs.

It is an advantage of the invention providing simplicity during the milling step, since only one plan is to be done, and give also simplicity for the connection step as module contain already connection elements.

The invention is based on the insight that the introduction of a pre-embedded module in the card creates a competitive advantage over the prior art.

The method creates a pre-embeddable electronic module with the features of @2.

Data carrier comprises a metal layer with a recess, an electronic module comprising a chip and being embedded in said recess, and a plastics layer with embedded antenna wires, wherein the electronic module has a flange portion and a shaft portion with reduced diameter, wherein chip contacting surfaces are provided on the underside of the flange portion. Such a data carrier further comprises a molded base body positioned around the flange part of the electronic module comprising at least two embedded conducting plots extending from the upper surface of the molded base body to the lower surface of the molded base body, two or more first ACFs provided between each of the chip contacting surfaces of the flange portion and a corresponding plot bringing each of the chip contacting surfaces into conductive contact with the corresponding plot, and two or more second ACFs provided between each plot and a corresponding antenna wire at the surface of the plastics layer bringing each of plots into conductive contact with the corresponding antenna wire.

Further embodiments of the invention are laid down in the dependent claims.

The term diameter in view of the shaft and flange portions of the electronic module or the data carrier do not relate to a circle, oval or elliptic form of these portions in cross section. A chip used in this context to be embedded in the electronic module is rectangular in a view from above. The shape of the shaft and flange portions are often also rectangular and delimit as such the "diameter" of these portions. The difference in diameter therefore often relates to the then parallelepiped shape of the space in between.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1A to 1E: show the method steps of preparation of a preembedded electronic module to be mounted in a data carrier in five schematical sectional views starting from the electronic module until the preembedded electronic module;
- Fig. 2A to 2C: show the method steps of preparation of a data carrier comprising a metallic layer, a plastics layer, and the preembedded electronic module of Fig. 1E to be arranged within a recess in the metallic layer according to an embodiment of the invention in three schematical sectional views;
- Fig. 3: shows a schematical sectional view of three specimen of a metallic layer as a cardbody during lamination without insert to produce the cardbody as shown in Fig. 2A;
- Fig. 4: shows a view from above on a data carrier; and
- Fig. 5: shows a further pre-embedded electronic module in a further associated data carrier.

### DESCRIPTION OF PREFERRED EMBODIMENTS

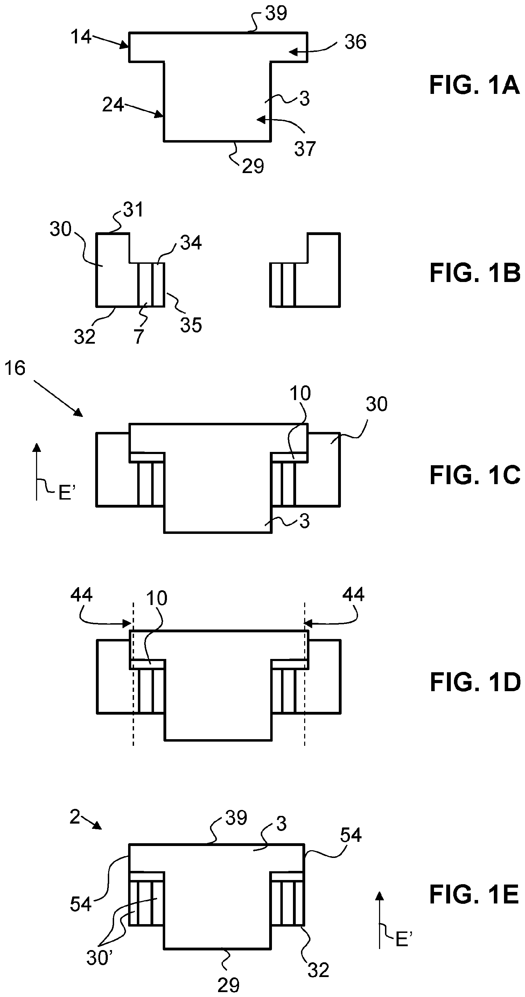

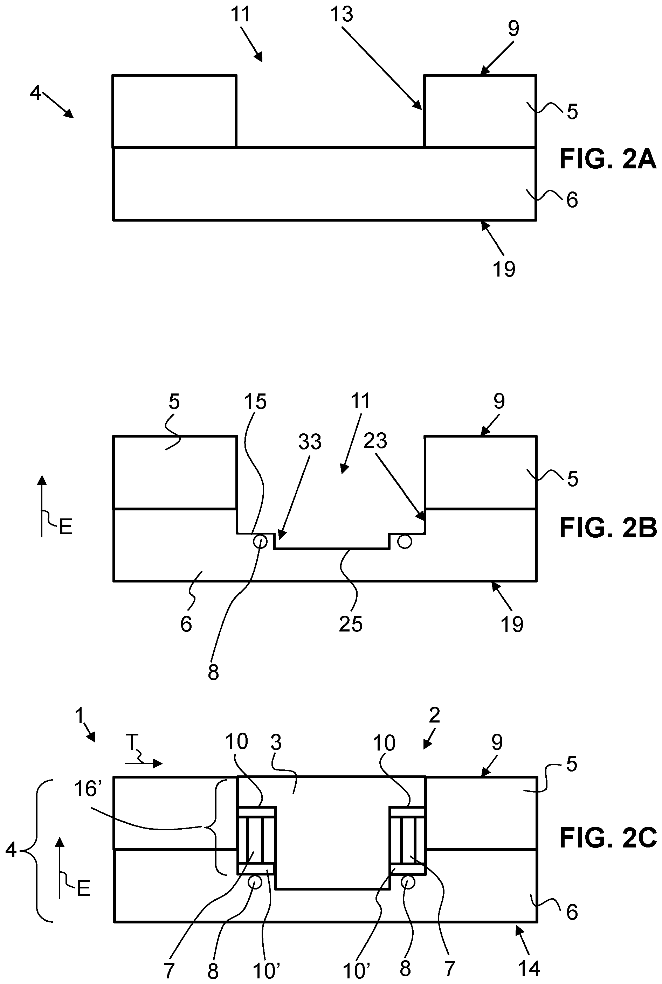

The invention is directed to the construction of a data carrier 1 with an embedded electronic module 2 comprising an electronic module 3 as shown in Fig. 2C. The cardbody 4 comprises a metallic layer 5 and a plastics layer 6 and receives as an insert the embedded electronic module 2 as shown in Fig. 1E. The metallic layer 5 can be a rigid metal plate made - inter alia - from steel, aluminum, tungsten, gold or silver. The plastics layer 6 can be a layer laminated on the back of the metallic layer 5 and made from a polymer, e.g. a PVC layer or made of PC or PET. As will be seen later, the plastics layer 5 is laminated with antenna wires 8 at a specific predetermined depth in the layer. There can be especially absence of any shielding.

The data carrier 1 comprises an antenna (schematically shown as circles 8) in the plastics layer 6 which is in connection with the electronic module 3 via at least two conductive plots 7 which are connected with the electronic module 3 on one side and with the antenna wires and other connecting wires on the other side with conductive contact means as e.g. an anisotropic conductive film 10, in short ACF, on each side, which also provides an adhesive effect. The plots 7 are oriented in the extension direction E of the data carrier 1 which is the direction of the adjacent layers 5 and 6. The extension direction E extends from a top side 9 of the data carrier 1 towards a bottom side 19 of the data carrier 1.

As readily follows from the Figs. 2A to 2C, the data carrier 1 corresponds in each case to a multi-layer structure wherein layers are arranged above one another with respect to the extension direction E'. The top side 9 of the data carrier 1 is provided by the uppermost layer, which corresponds here to the metallic layer 5. The bottom side 19 of the data carrier 1 corresponds to the lowermost layer, which corresponds here to an overlay here a PVC overlay, as plastics layer 6. It should be noted here that the metallic layer 5 forms the outermost layer of the data carrier 1, that is, there is no overlay or the like arranged on the top surface 9 of the first metallic layer 5.

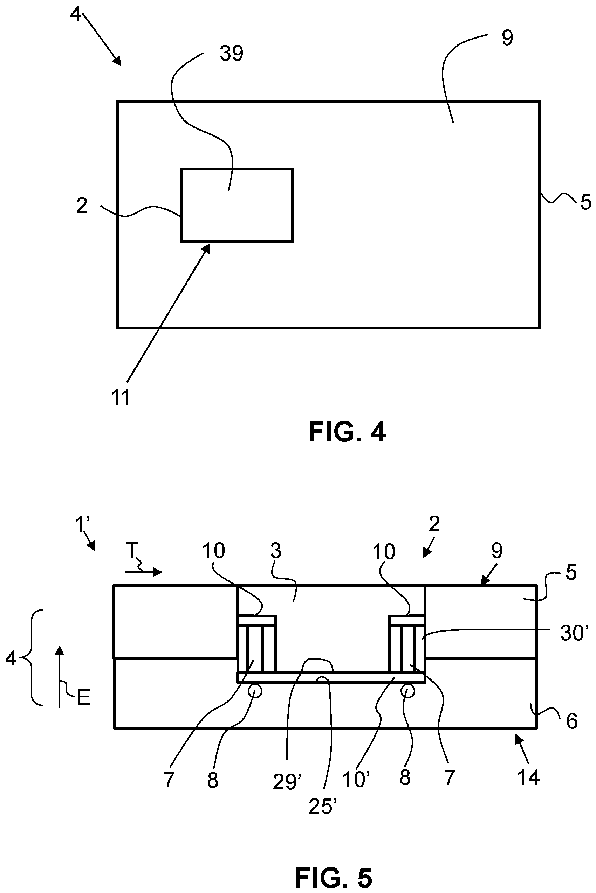

In a view from above, as follows from Fig. 4, the metallic layer 5 is a continuous metallic layer delimiting a recess 11, wherein the metallic layer 5 comprises just the said recess 11 and does not comprise any slits or the like that extend into the first metallic layer 5. Furthermore, the metallic layer 5 has the shape of a plate comprising flat or even surfaces. The electronic module 3 as shown in Fig. 2C is fully arranged within said recess 1 so that the upper surface 9 is the same for the electronic module 3 as for the metallic layer 5. In a different embodiment (not shown), the electronic module 3 can also be only partially integrated so that there are positions of the electronic module 3 are extending beyond the upper surface 9. The position of the chip is shown in an upper left position as an ISO requirement, but other chip positions are of course possible.

To this end a size (in a view from above) of the recess 11 essentially corresponds to a size of the preembedded electronic module 2 in the region of the arrangement of the electronic module 3 within the recess 11. In fact, the metallic layer 5 completely surrounds the electronic module 3 in the region of its arrangement in the recess 11 and when seen along a circumferential direction of the electronic module 3. The region of arrangement of the electronic module 3 in the recess 11 corresponds here to an upper part of the electronic module 3. In fact, said upper part of the electronic module 3 can comprise a pattern of metal contacts that are configured to electrically connect to the electronic module 3 to an external reader. Hence, in such an example the data carrier 1 corresponds to a dual interface smart card or combi-card that is configured to connect its electronic module 3 to an external reader by means of a contact-based connection via the metal contacts as well as contactless via the antenna comprising the antenna wires 8. The antenna preferably corresponds to an RFID antenna. The electronic module 3 preferably corresponds to an RFID module.

The metallic layer 5 of all embodiments can be electrically conductive or electrically nonconductive. Although not depicted in the figures, the metallic layer 5 may comprise at least one personalization element on and/or in its top surface 9. The personalization element can be an image and/or an alphanumeric character and is preferably a print such as an inkjet print or a laser drilling.

When seen from the top side 9 the data carrier 1 consists of the metallic layer 5 and the electronic module 3 being arranged within the recess 11 of the metallic layer 5. Since the size of the recess 11 of the metallic layer 5 corresponds to the size of the electronic module 3 in its upper part, only a top surface of the electronic module 3 is left uncovered by the metallic layer 5. Again, in other words, an inner surface 13 of the metallic layer 5 that delimit the recess 11 of the metallic layer 5 are arranged immediately adjacent to a circumferential surface 14 of the electronic module 3 in its upper region.

As furthermore follows from the figures, an area expansion of the metallic layer 5 corresponds to an area expansion of the data carrier 1 with respect to a transverse direction T running perpendicularly to the extension direction E. In other words, a size of the metallic layer 5 corresponds to a size of the data carrier 1 with respect to the transverse direction T. Again, in other words, the metallic layer 5 extends until an outer edge of the data carrier 1 and is not, for instance, provided only regionally in the data carrier 1.

As further follows from Fig. 2B and 2C, the plastics layer 6 comprises a milled recess 12. The size of the milled recess in the plastics layer 6 with respect to the transverse direction T is the size of the upper surface electronic module 3 with respect to the transverse direction T. The milled recess 12 of the plastics layer 6 is arranged essentially congruent with respect to the extension direction E. That is, the recess 12 of the plastics layer 6 comprises the same inside wall, forming the first inside surface 23. When seen from the top side 9 of the data carrier 1 towards the bottom side 19 of the data carrier 1, there is provided a second inside surface 33 in the plastics layer 6 having a smaller diameter than the first inside surface 33. Usually, the recess 11 as well as the recess are rectangular or square, so Fig. 2A to Fig. 2C would be the same images if they would represent the direction which is perpendicular to direction E and perpendicular to direction T. This milled recess 12 has therefore a step and shoulder creating two surfaces, an outer bottom surface 15 and an inner bottom surface 25 being parallel to top side 9 and bottom side 19 of the card body.

The size of inner bottom surface 25 is essentially equal to the size of lower surface 29 of the electronic module 3, whereas the size of upper surface 39 of the electronic module 3 is similar to and preferentially slightly larger than the size of outer bottom surface 15. This is due to the fact that the preembedded electronic module 2 comprises at least two conductive plots 7 provided adjacent to and surrounding the body of the electronic module 3 and having the side surfaces punched out as shown in Fig. 1D out of the intermediate module as shown in Fig. 1C.

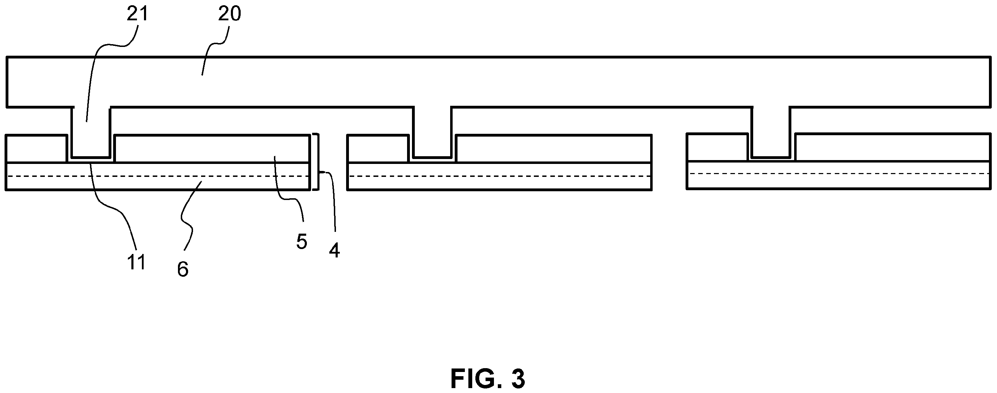

The data carrier 1 as shown in Fig. 2C is produced in a two-step process via the preembedded electronic module 2 as shown in Fig. 1E wherein it is possible to create the card body 4 as starting point of the embedding process and shown in Fig. 2A according to the approach described in connection with Fig. 3 which shows a schematical sectional view of three specimen of a metallic layer (as a cardbody 4) during lamination without insert to produce the cardbody 4 as shown in Fig. 2A. Since cardbody 4 is a multilayer element, i.e comprising the metallic layer 5 after the lamination of the plastics layer 6 on the underside, a dashed line is introduced in the latter to visualize a multilayered structure. The three metallic layer 5 card bodies are connected via a lamination plate 20 on the upper side, wherein this lamination plate 20 comprises outgrowths 21 being molded into the preexisting holes 11 in the metal layer 5 but not cutting through the entire card body 4. This outgrowth prevents a deformation of the cardbodies 4.

The first step of the invention is to prepare a preembedded electronic module 3 comprising a molded base 30 containing at least two conductive plots 7. The electronic module 3 with a chip creates a part of a dual interface module when embedded with ACF 10 in the base 30 creating a first assembly 16. The first assembly 16 from Fig. 1C is punched according to a defined dimension as shown in Fig. 1D creating the preembedded electronic module 2 of Fig. 1E.

The raw electronic module 3 has a flange part with the upper surface 39 and the outer circumferential surface 14 of this raw electric module 3. This flange part comprises the chip (not shown) of the smart card to be produced. Below the this flange part, the electronic module 3 comprises a shaft part with a reduced diameter, having an inner circumferential surface 24.

The molded base body 30 shown in Fig. 1B comprises an upper surface 31 encompassing a recess having an upper plot and base body surface 34. The inner part of the molded bas body 30 is a through hole with an inner surface 35. During the molding process a number of electric conductive plots 7 is embedded in the molded base body 30. In Fig. 1B two plots 7 are shown extending from the upper plot and base body surface 34 to the lowe surface 32 of the molded base body 30. Of course, it is possible to provide further plots 7 around the inner surface 35 of the through hole.

Fig. 1C then shows the step of inserting the raw electronic module 3 into the molded base 30, wherein the inner circumferential surface 24 is inserted into the through going hole and is in contact with the inner surface 35 of the base body 30. At the same time, the outer circumferential surface 14 of raw electric module 3 is inserted in the upper portion of the base body 30. For the inserting step, an ACF 10 is provided on the area of each of the plots 7. The lower surface 29 of the electronic module 3 is extending beyond lower surface 32 of the molded base body 30.

Fig. 1D shows the application of a punching step with dotted lines representing the punch line 44 going through the raw electronic module 3, the ACF 10 as well as the base body 30, wherein the punch line 44 is provided in a way to surround and staying outside the plots 7. The punch line 44 is defined in a way to cut a small portion of the flange portion of the raw electronic module 3 creating an outer circumferential surface 54 of preembedded electric module 3 with a remaining molded base body 30' volume which surrounds the shaft of the electronic module 3 and inter alia the plots 7. Thus, the preembedded electric module 3 comprises electric conducting ends of the plots on the underside and lower surface 32 of the remaining molded base body volume 30'.

As mentioned above the production of the data carrier 1 has a second step of embedding the preembedded electric module 3 into a card body.

In a preliminary step the cardbody structure is produced with at least a metal plate 5 and a cavity 11 which can also be named as recess or hole. The cavity 11 can be milled in a full metal after lamination or the hole 11 exists in the metal plate 5 before they are laminated with plastics layers 6. According to a preferred preparation step as shown in Fig. 3, special lamination plates 20 with outgrowth 21 matching the cardbody cavity 11 are used to prevent deformation during lamination.

Fig. 2A shows the cardbody 4 with a metal layer 5 comprising a cavity 11 and a plastics layer 6 on its back side. The top side 9 of the cardbody 4 is on the side of the metal layer and the bottom side 19 is on the side of the plastics layer 6.

Fig. 2B shows the next production step of milling a recess with a shoulder portion in the plastics layer 6 to reveal antenna connection pads 8 already embedded in the plastics layer when adding it to the metal layer 5 and to give room to fit the first assembly 16. The cavity 11 is enlarged in depth within the plastics layer 6and comprises a first inside surface 23 with the same diameter as the inner surface 13 of the metal layer 5. Then, the second portion of the milled recess 12 is provided in the plastics layer having a smaller diameter providing a second inside surface 33 in the plastics layer 6. Therefore the combined recess 11 and 12 have a first outer bottom surface 15 surrounding an inner bottom surface 25.

Fig. 2C finally shows the embedding of the first assembly 16 in the cardbody 4 with additional ACF 10 on the undersitde of the plots 7, i.e. either attached on the underside 32 of the preembedded electronic module 2 or positioned on the outer bottom surface 15 of the card body 4. As mentioned above for the upper portion of the plots 7, the ACF 10 is provided only in front and surrounding the plots 7 but are not present between neighboring plots 7. Fig. 2C indicates the position of antenna wires with reference numerals 8 which are of course already present in the cardbody of Fig. 2A and are molded together the plastics layer 6 onto the backside of the metal layer 5. It is noted that the inner surface 13 of the card body 4 has a diameter to accommodate the outside circumferential surface 54 of the preembedded electric module 2.

It is an advantage of the invention providing simplicity during the milling step, since only one plan is to be done, and also give simplicity for the connection step as module contain already connection elements.

The anisotropic conductive film (ACF) portions 10 are already used in connection with smart cards and are optimized for the embedding of functional modules such as dual interfaces and fingerprint sensors in contact/contactless smart cards. They perform mounting functional modules by adhesion and forming electrical conduction (electric circuits) simultaneously on substrates with low heat-resistance such as PVC, PC, and PET-G. Using ACFs 10 as module-embedding materials instead of solder or Ag paste reduces the number of processes and improves production efficiency.

Modules can be embedded on dual interface cards and smart cards with fingerprint identification by using typical equipment (milling and embedding apparatuses) commonly used in smart card assembly processes.

Fig. 5 shows a further pre-embedded electronic module 2 in a further associated data carrier 1'. The embodiment of Fig. 5 is similar to the embodiment as shown in Fig. 2C with some differences. The lower surface 29' of the shaft of the electronic module 3 is here flush with the plots 7 and surrounding remaining molded base body volume 30'. The lower second ACF 10' applied to these surfaces then creates a lower common bottom surface 25'.

ACF 10' is also present in areas without plot (as around the ACF 10 outside the drawing plane) or on the underside of the flange of the electronic module 3. The ACF can then be interrupted, especially for the second CF 10', to create plot 7 - antenna wire 8 pairs.

### LIST OF REFERENCE SIGNS

- 1: data carrier
- 2: preembedded electronic module
- 3: electronic module
- 4: card body
- 5: metallic layer
- 6: plastics layer
- 7: conductive plot
- 8: antenna wire
- 9: top side
- 10: conductive contact means, especially anisotropic conductive film (ACF)
- 11: recess / hole / cavity in the metal layer
- 12: milled recess extending in the plastics layer
- 13: inner surface / side wall
- 14: outer circumferential surface of raw electric module
- 15: outer bottom surface
- 16: first assembly
- 19: bottom side
- 20: lamination
- 21: outgrowth
- 23: first inside surface in the plastics layer / wall
- 24: inner circumferential surface
- 25: inner bottom surface
- 25': common bottom surface
- 29: lower surface of the electronic module
- 29': lower surface of the electronic module
- 30: molded base body with embedded plots
- 30': remaining molded base body volume
- 31: upper surface of molded base body
- 32: lower surface of molded base body
- 33: second inside surface in the plastics layer / wall
- 34: upper plot and base body surface
- 35: inner surface of base body
- 39: upper surface of the electronic module
- 44: punch line
- 54: outer circumferential surface of preembedded electric module
- E: extension direction of the data carrier
- E': extension direction of the preembedded electronic module
- T: transverse extension direction of the data carrier

## Claims

1. Method of producing a preembedded electronic module (3), comprising the steps of:
- providing an electronic module (2) with a flange portion and a shaft portion with reduced diameter, wherein chip contacting surfaces are provided on the underside of the flange portion,
- providing a molded base body (30) having: a first recess with a circumference adapted to accommodate the flange portion of electronic module (2), embedded conducting plots (7) positioned from the upper surface (34) of the first recess extending towards the underside (32) of the molded base body (30), and a central through hole with an inner circumference surface (35) adapted to accommodate the shaft portion of electronic module (2),
- inserting the electronic module (2) into the first recess and the through hole, wherein an conductive contact means (10) are provided either on the chip contacting surfaces of the flange portion or on the plots (7) bringing each of the chip contacting surfaces into conductive contact with one of the plots (7) creating an intermediate module,
- punching the preembedded electronic module (3) out of the intermediate module with a circumference cutting through the metal layer (5), the conductive contact means (10) and the molded base body (30) outside the plots (7).

2. Method of producing a data carrier (1) having a metal layer (5) with a recess (11), an electronic module (2) comprising a chip embedded in said recess (11), and a plastics layer (6) with embedded antenna wires (8), **characterized by** the method steps of
- producing a preembedded electronic module (3) according to claim 1,
- providing a cardbody (4) with the metal layer (5) and the plastics layer (6) comprising the embedded antenna wires (8),
- wherein either the cardbody (4) has a pre-prepared recess (11) throughgoing the metal layer (5) or the method comprises the step of creating a recess (11) by milling said recess (11) in the metal layer (5),
inserting the preembedded electronic module (3) into the recess (11).

3. Method of producing a data carrier (1) according to claim 2, wherein the pre-prepared or milled recess (11) in the plastics layer (6) ends in a distance above the antenna wires (8) for allowing an inductive contact between the plots (7) of the preembedded electronic module (3) and associated antenna wires (8) in the plastics layer (6).

4. Method of producing a data carrier (1) according to claim 2, wherein the pre-prepared or milled recess (11) is milled or further milled into the plastics layer (6) with the same circumference as the recess in the metal layer (5) until a depth (15) revealing the antenna wires (8) in the plastics layer (6).

5. Method of producing a data carrier (1) according to claim 4, wherein the method comprises a further step of:
milling a reduced recess (12) in the recess (11) creating a lower surface (25) in the plastics layer (6).

6. Method of producing a data carrier (1) according to claim 4 or claim 5, wherein conductive contact means (10) are provided either on the underside of the plots (7) of the preembedded electronic module (3) or on the antenna wires (8) in the plastics layer (6) bringing each of the plots (7) into conductive contact with one of the antenna wires (8).

7. Method of producing a data carrier (1) according to any one of claims 2 to 6, wherein the conductive contact means are ACF (10).

8. Pre-embeddable electronic module (2) comprising an electronic module (3) with a flange portion (14) having a first diameter and a shaft portion (24) with reduced diameter, wherein chip contacting surfaces are provided on the underside of the flange portion, wherein the area between flange portion (14) and shaft portion (24) is filled with a molded base body (30) having embedded conducting plots (7) positioned between the upper surface (34) of the upper plot and base body surface (34) extending to the lower surface (32) of the molded base body (30), wherein conductive contact means (10) are provided between the chip contacting surfaces of the flange portion (14) and the plots (7).

9. Pre-embeddable electronic module (2) according to claim 8, wherein the shaft portion (24) of the electronic module (3) extends beyond the underside of the molded base body (30) with embedded conducting plots (7).

10. Pre-embeddable electronic module (2) according to claim 8, wherein the shaft portion (24) of the electronic module (3) is flush with the underside of the molded base body (30) with embedded conducting plots (7) and wherein at least the underside of the molded base body (30) is covered with an conductive contact means (10).

11. Data carrier (1) comprising
a metal layer (5) with a recess (11),
an electronic module (2) comprising a chip and being embedded in said recess (11), and
a plastics layer (6) with embedded antenna wires (8), wherein the electronic module (2) has a flange portion and a shaft portion with reduced diameter, wherein chip contacting surfaces are provided on the underside of the flange portion,
**characterized in that** the data carrier further comprises
a molded base body (30) positioned around the flange part of the electronic module (2) comprising at least two embedded conducting plots (7) extending from the upper surface (34) of the molded base body (30) to the lower surface (32) of the molded base body (30),
one or more first conductive conduct means (10) provided between each of the chip contacting surfaces of the flange portion and a corresponding plot (7) bringing each of the chip contacting surfaces into conductive contact with the corresponding plot (7), and
one or more second conductive contact means (10) provided between each plot (7) and a corresponding antenna wire (8) at the surface (15) of the plastics layer (6) bringing each of plots (7) into conductive contact with the corresponding antenna wire (8).
